# FASCICULE DE BREVET EUROPEEN

(11) **EP 0 752 392 B1**
(45) Date de publication et mention de la délivrance du brevet: **24.10.2001**
(21) Numéro de dépôt: 96401481.5
(22) Date de dépôt: 04.07.1996
(51) Int. Cl.: C03B 5/235, C03B 5/04

(54) **Procédé et four à boucle pour la fusion du verre**
Verfahren und Wannenofen zum Schmelzen von Glas
Method and tank furnace for melting glass

(30) Priorité: 06.07.1995 FR 9508171
(43) Date de publication de la demande: 08.01.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR); ARC INTERNATIONAL, 62510 Arque (FR)
(72) Inventeur: Bodelin, Pierre, 92170 Vanves (FR); Recourt, Patrick, 91460 Marcoussis (FR)
(74) Mandataire: Vesin, Jacques

(56) Documents cités:
- EP-A- 0 335 728
- EP-A- 0 447 300
- WO-A-90/12760

## Description

La présente invention est relative à la fusion du verre dans les fours à boucle. Plus particulièrement, elle a pour premier objet un procédé de fusion de verre dans un four à boucle, du type dans lequel :
- on introduit la charge dans la région d'une paroi arrière du four, on lui fait parcourir successivement, dans le sens longitudinal du four, une zone de fusion puis, lorsque la charge est entièrement fondue, une zone d'homogénéisation puis une zone d'affinage, et on évacue le verre fondu et affiné dans la région de la paroi avant du four;
- on envoie une flamme air-combustible à partir d'une première région de la paroi arrière décalée par rapport à l'axe longitudinal du four, et on évacue les fumées à partir d'une seconde région de la même paroi arrière sensiblement symétrique de la première par rapport audit axe; et
- on alterne périodiquement lesdites première et seconde régions.

II est connu de EP-A-447 300 un procédé de fusion et d'affinage d'une charge du type précité comportant un chauffage à l'aide d'une flamme aéro-combustible dans la zône de fusion et un complément à l'aide de flammes oxy-combustibles à combustion pulsée.

L'invention a pour but de permettre une réduction des émissions d'oxydes d'azote (NOₓ) par ce type de four, sans réduire la quantité ni la qualité du verre produit par le four.

A cet effet, l'invention a pour objet un procédé du type précité, caractérisé en ce qu'on envoie en outre au moins une flamme oxy-combustible au-dessus de la zone d'affinage, à partir d'un point de la paroi latéral adjacente à ladite seconde région qui est situé en regard de cette zone d'affinage.

Dans le présent mémoire, on entend par le mot "oxygène" de l'air substantiellement enrichi en oxygène, et de préférence de l'oxygène ayant une pureté d'au moins 90%, produit notamment par distillation d'air, adsorption sélective ou perméation sélective d'air.

Le procédé suivant l'invention peut comporter une ou plusieurs des caractéristiques suivantes :
- on envoie en outre une seconde flamme oxy-combustible au-dessus de la zone d'affinage à partir d'un second point symétrique dudit premier point par rapport à l'axe longitudinal, la puissance de cette seconde flamme oxy-combustible étant très inférieure à celle de la première flamme oxy-combustible et de préférence au plus égale à 25% de celle-c;
- la puissance oxy-combustible totale est très inférieure à la puissance air-combustible totale et de préférence de l'ordre de 25% de celle-ci;
- on génère la ou chaque flamme oxy-combustible avec des vitesses d'oxygène comprises entre 15 et 30 m/s environ et des vitesses de combustible comprises entre 15 et 70 m/s environ;
- les vitesses de l'oxygène et du combustible sont voisines l'une de l'autre;
- on envoie la ou chaque flamme oxy-combustible sous un angle de l'ordre de 0 à 20°, par rapport à la perpendiculaire à la paroi latérale correspondante, vers la paroi arrière du four;
- on envoie la ou chaque flamme oxy-combustible sous un angle de l'ordre de 20° vers le bas;
- la ou chaque flamme air-combustible est envoyée à environ 0,3 à 0,8 m, et de préférence à environ 0,35 à 0,4 m, au-dessus du bain de verre;
- le ratio air/combustible de la ou de chaque flamme air-combustible est réduit par rapport au ratio normal correspondant à la nature du verre traité;
- la ou chaque flamme oxy-combustible est sur-stoechiométrique;
- la ou chaque flamme oxy-combustible est stoechiométrique, et on envoie en outre un jet d'oxygène au-dessus de la zone d'affinage, à partir d'un point de la paroi latérale correspondante situé à peu près au-dessous du point d'injection de la flamme oxy-combustible correspondante.

L'invention a également pour objet un four à boucle de fusion du verre selon la revendication 12.

Des exemples de mise en oeuvre de l'invention vont maintenant être décrits en regard du dessin annexé, sur lequel :
- La Figure 1 représente schématiquement, en plan, un four à boucle conforme à l'invention; et
- la Figure 2 est une vue analogue d'une variante.

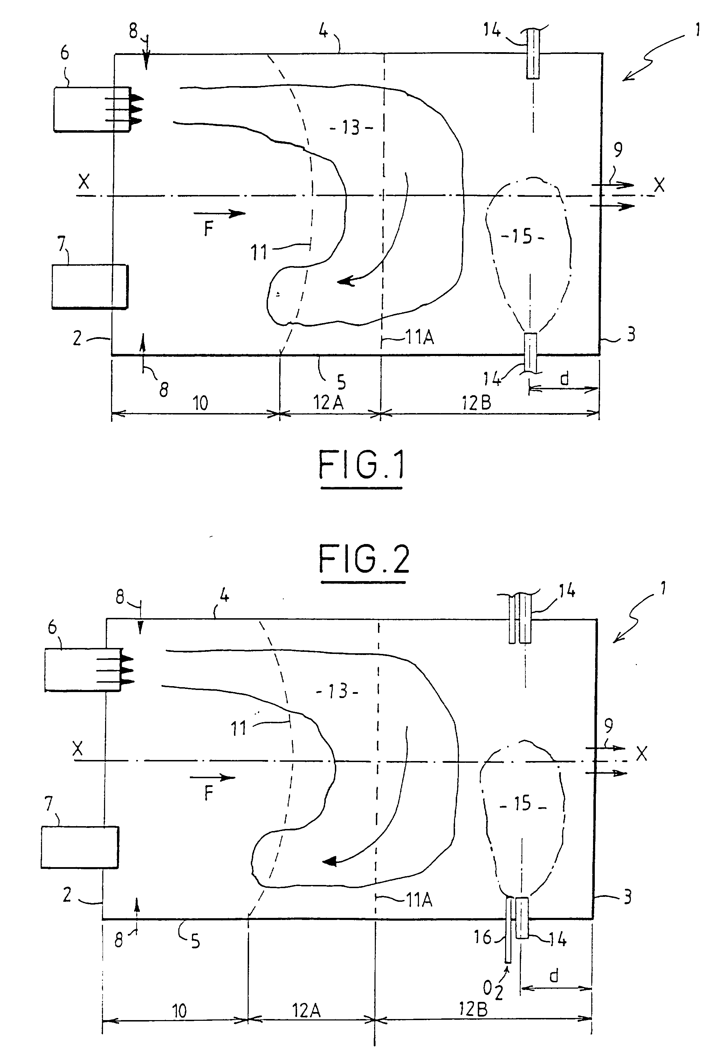

Le four à boucle 1 représenté schématiquement à la Figure 1 a une forme générale rectangulaire d'axe longitudinal X-X, avec deux petits côtés qui forment une paroi arrière 2 et une paroi avant 3, et deux grands côtés qui forment des parois latérales gauche 4 et droite 5, en considérant le sens de circulation F de la charge.

Le four comprend dans la paroi 2, de chaque côté de l'axe X-X et symétriquement par rapport à celui-ci, d'une part un groupe de brûleurs air-combustible 6, d'autre part une ouverture de sortie de fumées 7 formant régénérateur. Le four comprend également des moyens 8 d'introduction de la charge à fondre au voisinage de la paroi 2, et des moyens 9 de sortie du verre liquide produit dans la région de la paroi 3.

Tous les éléments décrits jusqu'ici sont classiques et définissent un four à boucle. Ils n'ont donc pas besoin d'être détaillés. En fonctionnement, la charge est introduite via les moyens 8 et circule globalement dans le sens F. Dans une première zone 10, dite zone de fusion, la charge est progressivement fondue en totalité. Puis, entre la limite 11 de la zone 10, qui a, en vue en plan, une forme plus ou moins bombée vers l'avant, et une autre limite 11A, située plus en avant, la charge fondue parcourt une zone 12A d'homogénéisation. Enfin, entre la limite 11A et la paroi avant 3, le verre fondu s'affine. La zone correspondante 12B est la zone d'affinage.

L'énergie calorifique est apportée de la façon suivante.

D'une part, de façon classique, l'un des deux groupes de brûleurs 6 (le groupe de gauche sur la Figure 1) envoie une flamme air-combustible 13 parallèlement à l'axe X-X. Cette flamme s'étend sensiblement en ligne droite, puis ses gaz chauds s'élèvent et s'incurvent en U pour se diriger, de l'autre côté de l'axe X-X, vers l'ouverture 7 en service, par où les fumées s'évacuent. Les gaz chauds de la flamme recouvrent nettement la limite 11A précitée, comme représenté. Les deux groupes de brûleurs 6 sont commutés alternativement à des intervalles de temps prédéterminés.

D'autre part, le four comporte, à une distance relativement faible d de la paroi 3, symétriquement par rapport à l'axe X-X, deux brûleurs oxy-combustible 14 situés en regard de la zone 12. La distance d est par exemple d'environ 1 m pour une longueur totale du four de l'ordre de 7 m et une puissance calorifique totale de l'ordre de 3500 kW, ce qui correspond à des longueurs de l'ordre de 2 à 3 m, suivant l'axe X-X, pour chacune des zones 10, 12A et 12B. Ces brûleurs 14 sont commutés en opposition par rapport au brûleur 6. Par exemple, dans la situation illustrée à la Figure 1, où ce sont les brûleurs 6 de gauche qui fonctionnent, c'est le brûleur 14 de droite, disposé à travers la paroi 5, qui est en action.

Les brûleurs 14 sont disposés de façon à envoyer une flamme oxy-combustible 15 au-dessus de la zone d'affinage 12B, pratiquement sans interférence directe avec la flamme 13. Dans ce but, ces brûleurs sont disposés près de la surface du bain, ou bien, si ce n'est pas possible, leur axe est légèrement incliné vers le bas, par exemple sous un angle de l'ordre de 20°. La hauteur des brûleurs 14 est de plus déterminée de façon à éviter l'apparition de points chauds à la surface du verre. Ainsi, de façon générale, les brûleurs 14 sont disposés à environ 0,3 à 0,8 m, et de préférence 0,35 à 0,4 m, au-dessus du bain de verre.

En vue en plan, les axes des brûleurs 14 sont orientés de manière à protéger la paroi avant du four de toute surchauffe. Ces axes peuvent en particulier être perpendiculaires à l'axe X-X, comme représenté, ou bien être légèrement inclinés vers l'arrière, par exemple de 10° environ.

80% environ de la puissance calorifique totale est fournie par les brûleurs 6, et les 20% restant par le brûleur 14. Ainsi, par rapport à un four classique dépourvu des brûleurs 14, la puissance des brûleurs 6 est réduite d'environ 20%, ce qui diminue d'autant le débit des fumées et donc la quantité de NOₓ émise.

De plus, grâce au fait que l'oxy-flamme, dont la température et la pression partielle en oxygène sont élevées, n'est pas mise en contact avec de grandes quantités d'azote chaud, le complément de puissance calorifique ne s'accompagne pas de la production de grandes quantités de NOₓ.

Pour optimiser ce phénomène, il convient de plus d'étager le plus possible l'oxy-flamme, en choisissant des vitesses de combustible et d'oxygène proches l'une de l'autre et faibles, typiquement comprises entre 15 et 30 m/s.

Dans certains cas où les aéro-flammes, à grande puissance, s'étendent jusqu'au dessus de la zone d'affinage, il convient d'augmenter l'impulsion du combustible pour rigidifier l'oxy-flamme et lui éviter d'être entraînée de façon trop importante vers l'arrière du four.

Si la nature du verre à produire le permet, on peut encore réduire la production de NOₓ en réduisant le ratio air/combustible des aéro-brûleurs 6, c'est-à-dire en les faisant fonctionner avec un défaut d'oxygène par rapport à leur fonctionnement normal correspondant à la nature du verre traité. La concentration des NOₓ est alors diminuée, ainsi que la température des aéro-flammes si les brûleurs 6 fonctionnent en régime sous-stoechiométrique, c'est-à-dire avec un défaut d'oxygène par rapport à la stoechiométrie de la réaction de combustion.

Le déficit d'oxygène, typiquement compris entre 10 et 30% environ du débit d'oxygène correspondant à un fonctionnement sans les brûleurs 14, peut alors être compensé de deux manières différentes.

Si le verre est peu sensible au caractère oxydant de l'atmosphère qui surmonte la zone d'affinage, l'oxygène déficitaire est introduit directement dans l'oxy-flamme 15. Les brûleurs 14 fonctionnent donc en régime sur-stoechiométrique, avec par conséquent une température de flamme réduite. L'agencement est alors très simple et est celui représenté sur la Figure 1. Il est à noter que l'excès d'oxygène sert préférentiellement à l'oxydation en CO2 du CO résultant du caractère sous-stoechiométrique des aéro-flammes, au détriment de l'oxydation de l'azote en NOₓ, dont la cinétique de réaction est beaucoup plus lente. En pratique, l'excès d'oxygène amené aux brûleurs 14 est calculé pour obtenir dans les fumées la même teneur en oxygène que dans le fonctionnement sans ces brûleurs, voire une teneur inférieure.

Si au contraire le verre est très sensible au caractère oxydant de l'atmosphère dans la zone d'affinage (verre extra-blanc par exemple), on fait fonctionner les brûleurs 14 en régime stoechiométrique, et tout l'oxygène déficitaire est injecté par l'intermédiaire de lances à oxygène 16 (Figure 2) situées pratiquement au-dessous de ces brûleurs 14 et orientées, par exemple, de la même manière.

Pour étager le plus possible cet oxygène au-dessus du bain, on choisit alors une vitesse d'éjection faible voisine des valeurs précitées et de la vitesse de circulation des gaz de fumées dans la zone d'affinage, soit environ 10 à 30 m/s.

Dans chaque cas, il est également possible de faire fonctionner en même temps le brûleur 14 situé du côté des brûleurs 6 en service, éventuellement avec la lance à oxygène 16 associée. L'énergie correspondante est alors au maximum égale à 25% environ de l'énergie de l'ensemble oxy-combustible 14 ou 14-16 opposé. Ceci permet d'assurer l'auto-refroidissement du brûleur 14 en question, ce qui, en l'absence de flamme, nécessiterait l'injection d'un flux d'air de refroidissement à travers ce brûleur.

## Revendications

1. Procédé de fusion de verre dans un four à boucle (1), du type dans lequel :
- on introduit la charge dans la région d'une paroi arrière (2) du four, on lui fait parcourir successivement, dans le sens longitudinal (F) du four, une zone de fusion (10) puis, lorsque la charge est entièrement fondue, une zone d'homogénéisation (12A) puis une zone d'affinage (12B), et on évacue le verre fondu et affiné dans la région de la paroi avant (3) du four;
- on envoie une flamme air-combustible (13) à partir d'une première région (6) de la paroi arrière (2) décalée par rapport à l'axe longitudinal (X-X) du four, et on évacue les fumées à partir d'une seconde région (7) de la même paroi arrière sensiblement symétrique de la première par rapport audit axe; et
- on alterne périodiquement lesdites première et seconde régions;
**caractérisé en ce qu'**on envoie en outre au moins une flamme oxy-combustible (15) au-dessus de la zone d'affinage (12B), à partir d'un point (14) de la paroi latérale (5) adjacente à ladite seconde région (7) qui est situé en regard de cette zone d'affinage.

2. Procédé suivant la revendication 1, **caractérisé en ce qu'**on envoie en outre une seconde flamme oxy-combustible au-dessus de la zone d'affinage (12B) à partir d'un second point (14) symétrique dudit premier-point (14) par rapport à l'axe longitudinal (X-X), la puissance de cette seconde flamme oxy-combustible étant très inférieure à celle de la première flamme oxy-combustible et de préférence au plus égale à 25% de celle-ci.

3. Procédé suivant la revendication 1 ou 2, **caractérisé en ce que** la puissance oxy-combustible totale est très inférieure à la puissance air-combustible totale et de préférence de l'ordre de 25% de celle-ci.

4. Procédé suivant l'une quelconque des revendications 1 à 3, **caractérisé en ce qu'**on génère la ou chaque flamme oxy-combustible avec des vitesses d'oxygène comprises entre 15 et 30 m/s environ et des vitesses de combustible comprises entre 15 et 70 m/s environ.

5. Procédé suivant la revendication 4, **caractérisé en ce que** les vitesses de l'oxygène et du combustible sont voisines l'une de l'autre.

6. Procédé suivant l'une quelconque des revendications 1 à 5, **caractérisé en ce qu'**on envoie la ou chaque flamme oxy-combustible sous un angle de l'ordre de 0 à 20°, par rapport à la perpendiculaire à la paroi latérale correspondante, vers la paroi arrière du four.

7. Procédé suivant l'une quelconque des revendications 1 à 6, **caractérisé en ce qu'**on envoie la ou chaque flamme oxy-combustible sous un angle de l'ordre de 20° vers le bas.

8. Procédé suivant l'une quelconque des revendications 1 à 7, **caractérisé en ce que** la ou chaque flamme air-combustible est envoyée à environ 0,3 à 0,8 m, et de préférence à environ 0,35 à 0,4 , au-dessus du bain de verre.

9. Procédé suivant l'une quelconque des revendications 1 à 8, **caractérisé en ce que** le ration air/combustible de la ou de chaque flamme air-combustible est réduit par rapport au ratio normal correspondant à la nature du verre traité.

10. Procédé suivant la revendication 9, **caractérisé en ce que** la ou chaque flamme oxy-combustible est sur-stoechiométrique.

11. Procédé suivant la revendication 9, **caractérisé en ce que** la ou chaque flamme oxy-combustible est stoechiométrique, et **en ce qu'**on envoie en outre un jet d'oxygène au-dessus de la zone d'affinage, à partir d'un point (16) de la paroi latérale (4, 5) correspondante situé à peu près au-dessous du point (14) d'injection de la flamme oxy-combustible correspondante.

12. Four à boucle (1) de fusion de verre, du type comprenant : des moyens (8) d'introduction d'une charge dans la région de la paroi arrière (2) du four; des moyens pour faire parcourir successivement à la charge, dans le sens longitudinal (F) du four, une zone de fusion (10), une zone d'homogénéisation (12A) puis une zone d'affinage (12B); des moyens (9) pour évacuer le verre fondu et affiné dans la région de la paroi avant (3) du four; symétriquement de chaque côté de l'axe longitudinal (X-X) du four, au moins un brûleur aircombustible (6) et une ouverture (7) d'évacuation des fumées appliqués dans la paroi arrière; et des moyens pour alterner le fonctionnement de ces brûleurs, **caractérisé en ce qu'**il comprend en outre dans chaque paroi latéral (4, 5) et en regard de la zone d'affinage (12B), un brûleur oxy-combustible (14) orienté de façon à envoyer une flamme oxycombustible (15) au-dessus de cette zone d'affinage (12) et **en ce qu'**il comprend des moyens pour commuter les brûleurs oxy-combustible (14) en opposition par rapport aux brûleurs air-combustible (6).

13. Four à boucle suivant la revendication 12, **caractérisé en ce qu'**il comprend en outre, à peu près au-dessous de chaque brûleur oxy-combustible (14), une lance à oxygène (16).

14. Four à boucle selon l'une quelconque des revendications 12 ou 13, **caractérisé en ce qu'**il comprend des moyens pour faire fonctionner le brûleur oxy-combustible (14) situé du même côté que le(s) brûleur(s) air-combustible (6) en fonctionnement, avec une puissance très inférieure à celle de l'autre brûleur oxy-combustible (14).

## Patentansprüche

1. Verfahren zum Schmelzen von Glas in einem Stirnbrennerofen (1) des Typs, bei dem man:
- die Charge in den Bereich einer Rückwand (2) des Ofens einbringt, sie nacheinander in der Längsrichtung (F) des Ofens durch eine Schmelzzone (10), dann nach vollständigem Aufschmelzen der Charge durch eine Homogenisierungszone (12A) und dann durch eine Läuterungszone (12B) leitet und das geschmolzene und geläuterte Glas im Bereich der Vorderwand (3) des Ofens austrägt;
- eine Luft-Brennstoff-Flamme (13) von einem bezüglich der Längsachse (X-X) des Ofens verschobenen ersten Bereich (6) der Rückwand (2) einleitet und die Dämpfe aus einem zu dem ersten Bereich bezüglich der Achse weitgehend symmetrischen zweiten Bereich (7) derselben Rückwand abzieht und
- den ersten und den zweiten Bereich in periodischem Wechsel betreibt;
**dadurch gekennzeichnet, daß** man außerdem oberhalb der Läuterungszone (12B) von einem Punkt (14) der neben dem zweiten Bereich (7) liegenden Seitenwand (5), der dieser Läuterungszone gegenüberliegt, mindestens eine Sauerstoff-Brennstoff-Flamme (15) einleitet.

2. Verfahren nach Anspruch 1, **dadurch gekennzeichnet, daß** man außerdem oberhalb der Läuterungszone (12B) von einem zu dem ersten Punkt (14) bezüglich der Längsachse (X-X) symmetrischen zweiten Punkt (14) eine zweite Sauerstoff-Brennstoff-Flamme einleitet, wobei die Leistung dieser zweiten Sauerstoff-Brennstoff-Flamme weit unter der Leistung der ersten Sauerstoff-Brennstoff-Flamme und vorzugsweise bei höchstens 25% davon liegt.

3. Verfahren nach Anspruch 1 oder 2, **dadurch gekennzeichnet, daß** die Sauerstoff-Brennstoff-Gesamtleistung weit unter der Luft-Brennstoff-Gesamtleistung und vorzugsweise bei etwa 25% davon liegt.

4. Verfahren nach einem der Ansprüche 1 bis 3, **dadurch gekennzeichnet, daß** man die bzw. jede Sauerstoff-Brennstoff-Flamme mit Sauerstoffgeschwindigkeiten zwischen etwa 15 und 30 m/s und Brennstoffgeschwindigkeiten zwischen etwa 15 und 70 m/s erzeugt.

5. Verfahren nach Anspruch 4, **dadurch gekennzeichnet, daß** die Sauerstoffgeschwindigkeiten und die Brennstoffgeschwindigkeiten einander ähnlich sind.

6. Verfahren nach einem der Ansprüche 1 bis 5, **dadurch gekennzeichnet, daß** man die oder jede Sauerstoff-Brennstoff-Flamme in einem Winkel von etwa 0 bis 20° bezüglich der Senkrechten der entsprechenden Seitenwand in Richtung der Rückwand des Ofens einleitet.

7. Verfahren nach einem der Ansprüche 1 bis 6, **dadurch gekennzeichnet, daß** man die oder jede Sauerstoff-Brennstoff-Flamme in einem Winkel von etwa 20° in Abwärtsrichtung einleitet.

8. Verfahren nach einem der Ansprüche 1 bis 7, **dadurch gekennzeichnet, daß** man die oder jede Luft-Brennstoff-Flamme ungefähr 0,3 bis 0, 8 m, vorzugsweise etwa 0,35 bis 0,4 m, oberhalb des Glasbads einleitet.

9. Verfahren nach einem der Ansprüche 1 bis 8, **dadurch gekennzeichnet, daß** man das Luft/Brennstoff-Verhältnis der oder jeder Luft-Brennstoff-Flamme gegenüber dem der Art des behandelten Glases entsprechenden normalen Verhältnis verringert.

10. Verfahren nach Anspruch 9, **dadurch gekennzeichnet, daß** die oder jede Sauerstoff-Brennstoff-Flamme überstöchiometrisch ist.

11. Verfahren nach Anspruch 9, **dadurch gekennzeichnet, daß** die oder jede Sauerstoff-Brennstoff-Flamme stöchiometrisch ist und man außerdem oberhalb der Läuterungszone von einem mehr oder weniger unterhalb des Einleitungspunkts (14) für die entsprechende Sauerstoff-Brennstoff-Flamme liegenden Punkt (16) der entsprechenden Seitenwand (4, 5) einen Sauerstoffstrahl einleitet.

12. Stirnbrennerofen (1) zum Schmelzen von Glas mit:
Einrichtungen (8) zum Eintragen einer Charge in einen Bereich der Rückwand (2) des Ofens; Einrichtungen zum Nacheinanderhindurchleiten der Charge in der Längsrichtung (F) des Ofens durch eine Schmelzzone (10), durch eine Homogenisierungszone (12A) und dann durch eine Läuterungszone (12B); Einrichtungen (9) zum Abziehen des geschmolzenen und geläuterten Glases im Bereich der Vorderwand (3) des Ofens; symmetrisch auf jeder Seite der Längsachse (X-X) des Ofens mindestens einem in der Hinterwand vorgesehenen Luft-Brennstoff-Brenner (6) und einer in der Hinterwand vorgesehenen Öffnung (7) zum Abziehen der Dämpfe und Einrichtungen zum Wechselbetrieb dieser Brenner, **dadurch gekennzeichnet, daß** er außerdem in jeder Seitenwand (4, 5) gegenüber der Läuterungszone (12B) einen Sauerstoff-Brennstoff-Brenner (14) aufweist, der so orientiert ist, daß oberhalb dieser Läuterungszone (12) eine Sauerstoff-Brennstoff-Flamme (15) eingeleitet wird, und daß er Einrichtungen zum Gegenschalten der Sauerstoff-Brennstoff-Brenner (14) in Abhängigkeit von den Luft-Brennstoff-Brennern (6) aufweist.

13. Stirnbrennerofen nach Anspruch 12, **dadurch gekennzeichnet, daß** er außerdem mehr oder weniger unterhalb jedes Sauerstoff-Brennstoff-Brenners (14) eine Sauerstofflanze (16) aufweist.

14. Stirnbrennerofen nach Anspruch 12 oder 13, **dadurch gekennzeichnet, daß** er Einrichtungen zum Betreiben des auf der gleichen Seite wie der sich in Betrieb befindende bzw. die sich in Betrieb befindenden Luft-Brennstoff-Brenner (6) liegenden Sauerstoff-Brennstoff-Brenners (14) mit einer weit unter der Leistung des anderen Sauerstoff-Brennstoff-Brenners (14) liegenden Leistung aufweist.

## Claims

1. Process for melting glass in a horseshoe-fired furnace (1), of the type in which:
- the charge is introduced into the region of a rear wall (2) of the furnace, the said charge is made to pass in succession, in the longitudinal direction (F) of the furnace, through a melting zone (10) then, when the charge is entirely melted, a homogenization zone (12A) and then a refining zone (12B) and the melted and refined glass is discharged in the region of the front wall (3) of the furnace;
- an air/fuel flame (13) is sent from a first region (6) of the rear wall (2), the said region being offset with respect to the longitudinal axis (X-X) of the furnace, and the fume is discharged from a second region (7) of the same rear wall, the second region being approximately symmetrical with the first region with respect to the said axis; and
- the said first and second regions are alternated periodically;
**characterized in that** at least one oxy-fuel flame (15) is also sent over the refining zone (12B) from a point (14) in the side wall (5) adjacent to the said second region (7), which point (14) lies opposite this refining zone.

2. Process according to Claim 1, **characterized in that** a second oxy-fuel flame is also sent over the refining zone (12B) from a second point (14) symmetrical with the said first point (14) with respect to the longitudinal axis (X-X), the power of this second oxy-fuel flame being very much less than that of the first oxy-fuel flame and preferably at most equal to 25% of it.

3. Process according to Claim 1 or 2, **characterized in that** the total oxy-fuel power is very much less than the total air-fuel power and preferably around 25% of it.

4. Process according to any one of Claims 1 to 3, **characterized in that** the or each oxy-fuel flame is generated with oxygen velocities of between about 15 and 30 m/s and fuel velocities of between about 15 and 70 m/s.

5. Process according to Claim 4, **characterized in that** the oxygen and fuel velocities are similar to each other.

6. Process according to any one of Claims 1 to 5, **characterized in that** the or each oxy-fuel flame is sent at an angle of around 0 to 20°, with respect to the perpendicular to the corresponding side wall, towards the rear wall of the furnace.

7. Process according to any one of Claims 1 to 6, **characterized in that** the or each oxy-fuel flame is sent downwards at an angle of around 20°.

8. Process according to any one of Claims 1 to 7, **characterized in that** the or each air-fuel flame is sent at about 0.3 to 0.8 m, and preferably about 0.35 to 0.4 m, above the bath of glass.

9. Process according to any one of Claims 1 to 8, **characterized in that** the air/fuel ratio of the or each air-fuel flame is small compared with the normal ratio corresponding to the nature of the glass treated.

10. Process according to Claim 9, **characterized in that** the or each oxy-fuel flame is superstoichiometric.

11. Process according to Claim 9, **characterized in that** the or each oxy-fuel flame is stoichiometric and **in that** an oxygen jet is also sent over the refining zone, from a point (16) in the corresponding side wall (4, 5) located roughly beneath the point (14) where the corresponding oxy-fuel flame is injected.

12. Horseshoe-fired furnace (1) for melting glass, of the type comprising: means (8) for introducing a charge into the region of the rear wall (2) of the furnace; means for making the charge pass in succession, in the longitudinal direction (F) of the furnace, through a melting zone (10), a homogenization zone (12A) and then a refining zone (12B); means (9) for discharging the melted and refined glass in the region of the front wall (3) of the furnace; at least one air-fuel burner (6) and a fume discharge opening (7), these being set in the rear wall symmetrically on each side of the longitudinal axis (X-X) of the furnace; and means for operating these burners alternately, **characterized in that** it furthermore includes, in each side wall (4, 5) and opposite the refining zone (12B), an oxy-fuel burner (14) oriented so as to send an oxy-fuel flame (15) above this refining zone (12) and **in that** it includes means for switching over the oxy-fuel burners (14) in opposition with respect to the air-fuel burners (6).

13. Horseshoe-fired furnace according to Claim 12, **characterized in that** it furthermore includes, approximately below each oxy-fuel burner (14), an oxygen lance (16).

14. Horseshoe-fired furnace according to either of Claims 12 and 13, **characterized in that** it includes means for making the oxy-fuel burner (14) located on the same side as the air-fuel burner(s) (6) in operation operate with a power very much less than that of the other oxy-fuel burner (14).
